# EUROPEAN PATENT APPLICATION

(11) **EP 4 420 986 A2**
(43) Date of publication of application: **28.08.2024**
(21) Application number: 24188514.4
(22) Date of filing: 10.02.2022
(51) Int. Cl.: B64D 27/24

(54) **ELECTRIC AIRCRAFT ENGINE**

(62) Divisional of application: 22156136.8
(71) Applicant: Lilium eAircraft GmbH, 82234 Wessling (DE)
(72) Inventor: WU, Eric, 81373 Munich (DE); VERMEIREN, Sébastien, 80997 Munich (DE); SHORTTE, Maurice, 81375 Munich (DE); MIRANDA, Pedro, 82211 Herrsching (DE); LAVEAU, Benoit, 80339 Munich (DE); RÖSICK, Joel, 81541 Munich (DE)
(74) Representative: Grünecker Patent- und Rechtsanwälte PartG mbB

(57) **Abstract**

The present invention provides an electric aircraft engine. It also provides an aircraft, comprising such an electric aircraft engine. According to both a first aspect and a second aspect of the present invention, the electric aircraft engine comprises an electric motor with a rotor configured to be driven in rotation about a central axis, a fan having a central yoke mechanically coupled to the rotor for driving the fan and a plurality of fan blades projecting radially outwardly from the yoke, and an anti-icing and/or de-icing system to remove and/or prevent built-up of ice on the fan, said anti-icing and/or de-icing system comprising an electrical power source and a wireless energy transfer system for wirelessly transferring energy for anti-icing and/or de-icing from the electrical power source to the fan. In the first aspect of the present invention, the electric motor comprises an electromagnetically excited resolver for determining an angular position of the rotor of the electric motor, and an anti-icing and/or de-icing control unit is configured to induce losses by adding a high-power, highfrequency component of current and flux to the normal excitation signals of the resolver, thereby heating up the resolver. In the second aspect of the present invention, the wireless energy transfer system consists of two coils, a transmitter coil electrically coupled to the electrical power source and a receiver coil thermally connected to the fan, the energy being transmitted wirelessly by induction via an air gap from the transmitter coil to the receiver coil.

## Description

The present invention concerns an electric aircraft engine. The present invention further relates to an aircraft, comprising such an electric aircraft engine.

Since the early days of flying, icing has been an important, safety-related issue that every aircraft manufacturer has had to deal with. Ice accretion over the surfaces of the critical aircraft engine rotating parts (such as blades, discs, shafts and hubs in conventional turboprop and turbofan engines) is particularly dangerous as it impairs engine performance and can even lead to complete engine failure. When ice forms on the individual blades of a propeller or fan, the lift (thrust) developed by each blade decreases, and in some cases, the propeller or fan becomes unbalanced. The aerodynamic imbalances of the propeller or fan blades are amplified due to their rotation, thus creating severe vibrations, which may result in structural damage. Over the years, anti-icing and de-icing equipment were developed to either prevent the formation of ice (anti-icing), or enable the aircraft to shed the ice before it becomes dangerous (de-icing).

De-icing is usually performed on conventional aircraft engines before takeoff, since ice formation is greatest on the ground or at low turbine speeds. However, icing also occurs during cruise or descent at low turbine speeds, or at zero turbine speed.

Unlike the ice accretion on fixed wings, the icing process on a rotating propeller or fan is strongly influenced by the combined effects of aerodynamic shear forces exerted by the boundary layer airflow and the centrifugal force associated with the rotation motion of the propeller or fan. It is to be noted that shed-off of the accreted ice on the propeller or fan blades will occur when the centrifugal forces overcome the interfacial adhesion forces between the ice layer and the blade surfaces. By applying a superhydrophobic coating on the propeller or fan blades, the adhesion forces between the ice and the blade surfaces can be further reduced.

On propeller-driven aircraft, anti-icing or de-icing is usually also accomplished by electrically heating at least a portion of the propeller blades, with the electric current passing through a brush block and slip ring to the respective propeller. A typical thermal-electric propeller anti-/de-icing system consists of either a series of heating wires or a layer of metal foil encapsulated in synthetic rubber "boots" glued onto the inner part of each propeller blade's leading edge, and prevent or remove ice at significant energy expense. This concept is not viable for aircrafts that do not have the requisite excess energy available during all flight phases. In piloted helicopters and other small aircraft, the electrical power required substantially exceeds the normal electrical system capacity, therefore requiring a secondary electrical system. In addition, the slip rings and brush blocks as well as the control leads in the lead strap (having control wires, which carry the power from the anti-/de-icer boot into the propeller housing and to the terminal block for the slip rings) must be inspected often and replaced when there is any sign of failure or excess wear. This is an expensive, time-consuming maintenance operation and a need has existed to reduce the maintenance and replacement of parts with this system.

Alternatively or complementarily, fluid-based anti-/de-icing systems for propellers involve spraying a fluid into a slinger ring in the spinner and then passing it over the blade surface by centrifugal force resulting from propeller rotation. The fluid loosens the ice, which is then finally blown away by centrifugal force. However, in the case of aircraft engines, anti-icing or de-icing with the aid of fluids inevitably adds size, weight, complexity, and more opportunities for failure (e.g. due to the need for a fluid reservoir, piping and a refilling device). For example, a single Boeing 737-500 jet typically requires 400 to 700 liters of anti-/de-icing fluid to handle. Moreover, the fluid reservoir must be installed where in-flight changes in the fluid level will not adversely affect the aircraft weight and balance. Fluid-type systems weigh more than thermal-electric systems, and allowances must be made for the loss of useful load when the reservoir is filled. Furthermore, the slinger rings also add weight, and tend to wear over time, thereby costing time and money during maintenance operations.

Especially for turbine engines, with a high number of blades and splitters, and, thus, very reduced space for additional equipment, there is no viable solution to the problem of ice buildup besides centrifugal force. Yet, the inner part of the blades may not build up enough centrifugal force to remove the accreted ice before it causes significant adverse effects.

Air and noise pollution are among the main drawbacks of today's aircraft. Electrically propelled aircraft address these two problems in a significant manner. Policies and markets are moving towards this direction. For example, Norway has committed to have all their domestic flights electrically propelled by 2040 (see: https://www.greenaironline.com/ news.php?viewStory=2438).

In particular, electric propulsion concepts are a key technology for the development of Vertical Take Off and Landing (VTOL) air taxis for urban air mobility. In the case of urban air taxis, icing issues will typically arise as a result of low air temperatures. This will require a substantial effort in the heating of critical components (such as drive shafts and fan blades) and consideration of how this might affect battery life and thus range. In the current helicopter world, most small helicopters do not have icing clearances due to the complexity of such systems and difficulty in protecting critical control mechanisms.

Therefore, there is currently an urgent need for action in the field of electric aircraft engines to solve the icing problem with as little complexity as possible and with little or no additional equipment or machinery. It goes without saying that such a solution should meet the safety requirements for flights under icing conditions. However, such a solution should not translate into a (significant) increase in the weight and space requirements of the respective electric aircraft engine in order to be able to achieve advantages in certification and technical performance.

In wind turbines, power is transmitted to the rotor via slip rings that are either brushed or wetted with mercury to provide power for blade pitch control. However, wind turbines are also prone to encounters with freezing rain and other low-altitude, high-water-content environments, such as ocean spray in the case of offshore wind turbines.

Most current wind turbine anti-/de-icing methods use electric heating or circulation of hot air inside the rotor blades, to prevent ice formation and to keep the surface temperature of the rotor blades above icing conditions. However, heating these massive areas, which are many times larger than airplane wings, adds to the cost of the turbine and is inefficient and energy-consuming. Composite-based turbine blades can also be easily damaged by overheating. Moreover, water from melting ice may simply run back and refreeze elsewhere. Another strategy in cold-weather regions is to use surface coatings that repel water or prevent ice from sticking on the surface of the turbine blade. However, none of the coatings has been able to eliminate ice completely, especially in critical regions near the blades' leading edges.

Non-contact power transfer has been used to a limited extent for telemetry in gas turbine engines (see: He, X.; Shu, W.; Yu, B.; Ma, X. Wireless Power Transfer System for Rotary Parts Telemetry of Gas Turbine Engine. Electronics 2018, 7, 58), but not for performing anti-/de-icing functions. In addition, inductive or non-contact slip rings are regularly used in signal and low power applications.

In view of the aforementioned circumstances, an object of the present invention is to provide an electric aircraft engine that solves the problem of ice formation with lower mechanical complexity and higher reliability than conventional approaches typically used for propeller anti-/de-icing, and ensures ice protection over the entire length of the fan blades, also in areas close to the axis of rotation where centrifugal force may not be sufficient.

According to the present invention, this object is achieved by providing an electric aircraft engine having the features specified in independent claim 1 or independent claim 2.

Accordingly, in a first aspect, the present invention resides in an electric aircraft engine, comprising an electric motor with a rotor configured to be driven in rotation about a central axis, a fan having a central yoke mechanically coupled to the rotor for driving the fan and a plurality of fan blades projecting radially outwardly from the yoke, and an anti-icing and/or de-icing system to remove and/or prevent built-up of ice on the fan, said anti-icing and/or de-icing system comprising an electrical power source and a wireless energy transfer system for wirelessly transferring energy for anti-icing and/or de-icing from the electrical power source to the fan,, wherein the electric motor comprises an electromagnetically excited resolver for determining an angular position of the rotor of the electric motor, and an anti-icing and/or de-icing control unit is configured to induce losses by adding a high-power, high-frequency component of current and flux to the normal excitation signals of the resolver, thereby heating up the resolver.

Energy is transferred to the fan of the electric aircraft engine by means of a wireless (non-contact) energy transfer, so that sufficient energy is provided for anti-icing or de-icing. As a result, the task of anti-icing or de-icing fans can be performed satisfactorily, especially in the areas close to the axis of rotation, where the acting centrifugal forces may not be sufficient. The electrical energy is not supplied along lines or contact, but through non-wire-bound electromagnetic fields. At a small air gap, efficiencies of well over 90% can be reliably achieved when operating at a high frequency. The use of a wireless energy transfer system thus represents a highly efficient anti-icing or de-icing strategy.

The task of anti-icing/de-icing is accomplished by taking advantage of the resolver, which is an already available and necessary component in the electric motor to provide precise motor control. The resolver combines two functions in one part: the function of sensing the rotor position (used to control the electric motor), and the anti-icing and/or de-icing function.

A second aspect of the present invention is directed to an electric aircraft engine, comprising an electric motor with a rotor configured to be driven in rotation about a central axis, a fan having a central yoke mechanically coupled to the rotor for driving the fan and a plurality of fan blades projecting radially outwardly from the yoke, and an anti-icing and/or de-icing system to remove and/or prevent built-up of ice on the fan, said anti-icing and/or de-icing system comprising an electrical power source and a wireless energy transfer system for wirelessly transferring energy for anti-icing and/or de-icing from the electrical power source to the fan, wherein the wireless energy transfer system consists of two coils, a transmitter coil electrically coupled to the electrical power source and a receiver coil thermally connected to the fan, the energy being transmitted wirelessly by induction via an air gap from the transmitter coil to the receiver coil.

Preferably, in the electric aircraft engine according to the second aspect of the present invention, the electric motor comprises a hollow-cylindrical motor shaft and a stationary guide shaft arranged inside the hollow-cylindrical motor shaft, wherein the transmitter coil is attached to the front end face of the stationary guide shaft and is powered by the electrical power source via electrical lines in the stationary guide shaft, wherein the fan comprises a central yoke, and wherein the transmitter coil is attached to a rear end face of the central yoke.

Further preferably, in the electric aircraft engine according to the first or second aspects of the present invention, the anti-icing and/or de-icing system may further comprise at least one electrothermal element in thermal communication with the fan and powered by the wirelessly transferred energy, and/or may further comprise at least one actuation mechanism powered by the wirelessly transferred energy.

The electrothermal element may be attached to or formed as an integral part of the fan of the electric aircraft engine to enable prevention or reduction of ice formation on its surface. The electrothermal behavior of the electrothermal element can be tuned to suit any surface and power requirement to achieve rapid and uniform heating for anti-icing and/or de-icing.

The aforementioned use of the resolver as a targeted heating source to additionally fulfill the anti-icing and/or de-icing function can also be advantageously combined with the second aspect of the present invention.

Moreover, in both the first aspect of the present invention and the second aspect of the present invention, it is further preferred that the resolver consists of a resolver rotor connected to rotate with the rotor of the electric motor, and a resolver stator, and that at least one of the resolver rotor and the resolver stator is in thermal communication with the fan, so that heat from the resolver is allowed to diffuse into the fan for anti-icing and/or de-icing.

To perform its position measuring function the resolver rotor is non-rotatably connected to the rotating motor shaft, while the resolver stator is secured to the stationary motor shield. To perform its anti-/de-icing function the resolver is large enough relative to the fan to provide sufficient heat for anti-/de-icing.

Further preferably, the electric aircraft engine may further comprise a separate circuit in parallel to a normal resolver excitation system to introduce the high-power, high-frequency component of current and flux into the resolver.

The separate circuit allows for selectively injecting the high-power, high-frequency signal and thereby deliberately (intentionally) induce extra losses in the resolver which contribute to heating the resolver and consequently heating the fan (in particular, blades of fan) in thermal communication with the resolver.

In a further embodiment it can be provided that the anti-icing and/or de-icing control unit corresponds to or is part of an engine control unit ECU for controlling the electric motor.

Such an integration of the anti-icing and/or de-icing control unit into the engine control unit ECU means a space-saving and therefore inexpensive implementation of the control unit, while at the same time providing high functional reliability.

Further advantages and details of the present invention can be taken from the following description of the schematic illustrations in the figures, which show the following:
- Fig. 1: a longitudinal section through an electric aircraft engine equipped with an anti-icing and/or de-icing system, according to a first embodiment of the invention;
- Figs. 2 and 3: a cross-section and a longitudinal section through an electric aircraft engine equipped with an anti-icing and/or de-icing system, according to a second embodiment of the invention; and
- Fig. 4: a longitudinal section through an electric aircraft engine equipped with an anti-icing and/or de-icing system, according to a third embodiment of the invention.

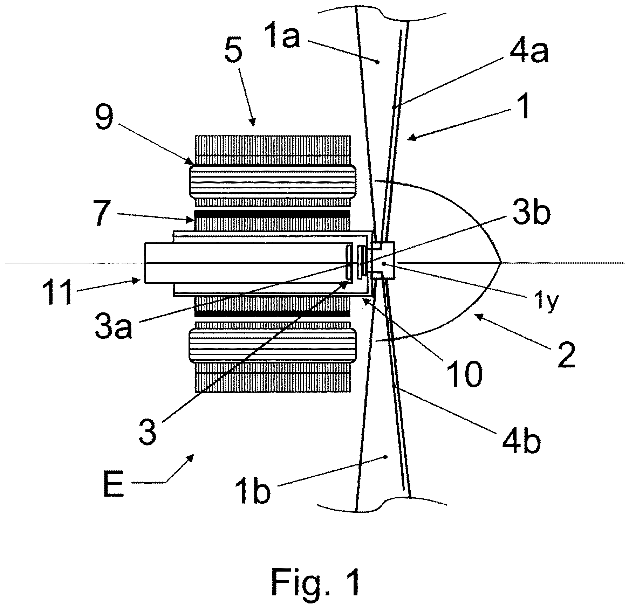

Although the invention is illustrated in Figs. 1 to 4 in the form of separate embodiments, this is done for convenience only, and these embodiments may therefore be combined in any manner to enhance the anti-icing and/or de-icing effects thereby achieved. Consequently, an electric aircraft engine E may well be equipped with all three of the anti-icing and/or de-icing systems illustrated in Figs. 1 to 4 to provide maximum protection against ice formation.

The electric aircraft engine E according to Fig. 1 has a fan 1 with several blades 1a, 1b, which is rotationally driven for thrust generation by an electric motor 5 consisting of a radially outer stator 9 and a radially inner rotor 7. For this purpose, the rotor 7 is mounted in a rotationally fixed manner on a hollow-cylindrical motor shaft (drive shaft) 10, which in turn is coupled in a rotationally fixed manner to the fan 1 at its front end face in order to transmit a torque to the fan 1. A conical spinner 2 is arranged in front of the fan 1 at the center of the engine E. The spinner 2 rotates with the rotor 7, the motor shaft 10 and the fan 1. This spinner 2 improves the aerodynamics and efficiency of the fan 1.

As an alternative to this embodiment according to Fig. 1, but nevertheless covered by the present invention, it is conceivable to configure the electric motor as a hub motor, wherein the stator of the electric motor is mounted in a rotationally fixed manner on a stationary shaft, while the rotor of the electric motor is rotated about the outside of the stator. The rotor then has means on its outside for transmitting the torque to the unit to be driven mechanically (i.e., in this case, the fan).

Preferably, the fan 1 is ducted by means of a casing (not shown). Ducted fans have efficiency advantages, which arise from the presence of the duct. Blade tip losses are reduced and the presence of a stator row removes exit swirl. Another advantage of ducted fans is that the duct can contain a blade-off in the case of blade loss or bird strike making them safer than open propellers. A fortiori, a major advantage of ducted fans over unducted propellers is that the duct acts to significantly mitigate noise, both blade passing and broadband. This is achieved both by the presence of the duct and by acoustic liners mounted within them. This is of particular importance when the payload of aircraft is increased.

An electrical power source (not shown) (in the form of several batteries installed in the aircraft) provides the required electrical power for the electric motor 5. Battery electric propulsion systems produce no emissions in flight and are characterized by high efficiency, making battery electric powered aircraft particularly suitable for short flights with vertical takeoffs and landings.

However, it is problematic that ice can form on the rotating parts 1, 2 of the electric aircraft engine E, especially on the external surfaces of the fan blades 1a, 1b and the spinner 2 that are exposed to the flow, both on the ground and in flight. Since these surfaces are aerodynamically effective surfaces, ice formation on these surfaces can lead to a drastic degradation of the aerodynamic characteristics of the aircraft.

To ensure protection of the rotating parts (fan 1 and spinner 2) of the electric aircraft engine E from icing, an anti-icing and/or de-icing system comprising a wireless energy transfer system 3 is employed. Via this wireless energy transfer system 3, which is arranged between the (not shown) electrical power source and the rotating parts to be protected (fan 1 and spinner 2), the energy required to prevent ice formation (anti-icing) and/or to remove an already adhering ice layer (de-icing) is transmitted.

For this purpose, the wireless energy transfer system 3 consists of two coils - a transmitter coil 3a electrically coupled to the electrical power source (not shown) and a receiver coil 3b thermally connected to the rotating parts (fan 1 and spinner 2) of the engine E in order to keep their surfaces free of ice.

To realize the electrical coupling, a stationary guide shaft 11 is arranged inside the hollow-cylindrical motor shaft 10, with the transmitter coil 3a being attached to the front end face of said guide shaft 11. The transmitter coil 3a is powered by the electrical power source via electrical lines (not shown) in the guide shaft 11. From this transmitter coil 3a, the energy is transmitted wirelessly by induction via an air gap to the receiver coil 3b, which is attached to a rear end face of a central yoke 1y of the fan 1.

This central yoke 1y is non-rotatably connected to the front end face of the motor shaft 10, which, in turn is non-rotatably connected to the rotor 7 of the electric motor 6. In this way, a mechanical connection is established between the rotor 7 of the electric motor 5 and the fan 1, thereby allowing the fan 1 to rotate about its central axis when the electric motor 5 is energized.

To realize a thermal coupling, electrothermal elements 4a, 4b are provided in the fan blades 1a, 1b, which are supplied with electrical energy from the receiver coil 3b. This electrical energy is then converted into thermal energy by the electrothermal elements 4a, 4b to heat the fan blades 1a, 1b rapidly and uniformly over their entire extent. However, the thermal coupling between the receiver coil 3b and the rotating parts (fan 1 and spinner 2) of the electric aircraft engine E can also be carried out in a particularly simple manner wirelessly via radiation, (free and/or forced) convection and/or thermal conduction. In addition, the energy received wirelessly from the receiver coil 3b can also be used to power actuation mechanisms (actuators) in the rotating parts (fan 1 and spinner 2) of the electric aircraft engine E.

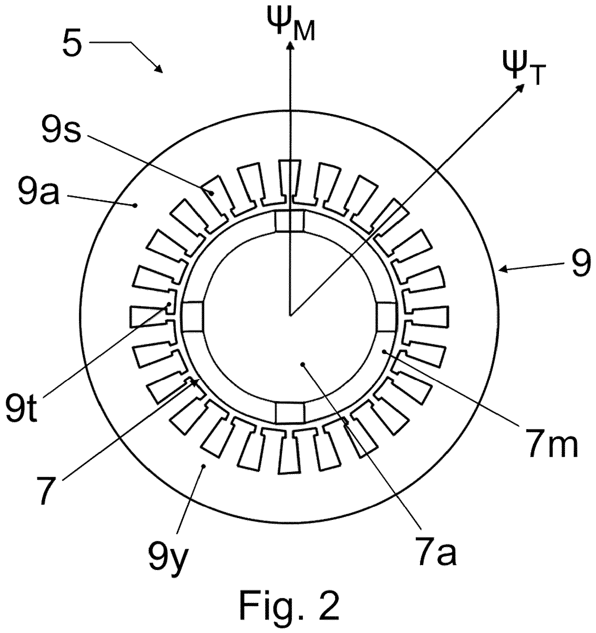

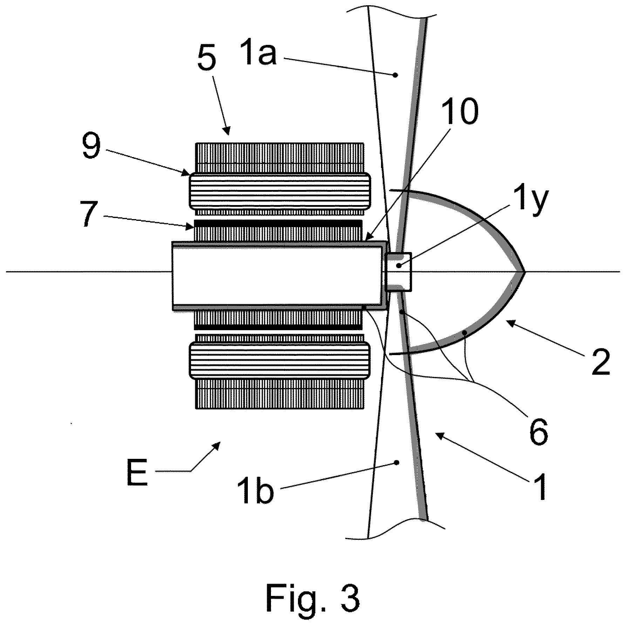

Fig. 2 shows a cross-sectional view of an electric motor 5 for an electric aircraft engine E, which performs a dual function according to a second embodiment of the invention: On the one hand, according to the longitudinal sectional view of the engine E in Fig. 3, the electric motor 5 drives the fan 1 for generating the required thrust during the takeoff hover, climb, cruise, descent, and landing hover phases of a VTOL aircraft. On the other hand, however, the electric motor 5 also serves as a heater or vibrator to provide the necessary thermal or vibrational energy to prevent the aerodynamically effective surfaces of the rotating parts (fan 1 and spinner 2) of the engine E from icing or remove it once it is formed.

The stator 9 of the electric motor 5 comprises a stator core 9a, which is provided on a radially inner side with a plurality of radially projecting stator teeth 9t between which are formed stator slots 9s into which stator windings (not shown) are inserted. The stator windings are supplied with an alternating current generated by the power electronics from the direct current supplied from the electrical power source (e.g. from batteries, or from generators to motors providing propulsion). The electric motor 5 is an internal rotor motor. Thus, the stator teeth 9t and the yoke segments 9y connecting these stator teeth 9t form an annular or tubular body in which the rotor 7 is rotatably arranged. The rotor 7 consists of a cylindrical rotor core 7a, on which rotor magnets 7m with a plurality of segment-shaped magnetic poles are arranged.

In this context, it should be mentioned once again that, as an alternative to the embodiment described above, it is also conceivable and encompassed by the invention to configure the electric motor as a hub motor, in which the stator of the motor is located inside it and is enclosed by the rotor, which in turn causes the fan to rotate. In this case, the rotor consists of a plurality of alternatingly radially arranged annular permanent magnets or a correspondingly multipolar magnetized ring.

When an alternating voltage is applied to the stator windings of the electric motor 5, a stator current made up of two components flows into it. The two current components are the magnetizing component and the real power (or torque) component. The magnetizing component lags the applied voltage by 90° and is responsible for creating the magnetizing component ψ_{M} of electromagnetic flux. The real component is in phase with the applied voltage and supplies the real or active power (watts) to the electric motor 5. Consequently, this component creates the torque component ψ_{T} of electromagnetic flux, which induces rotation to the shaft 10 of the motor and is responsible for the mechanical output and internal losses. These two components ψ_{M} and ψ_{T} of electromagnetic flux are represented by two vectors in Fig. 2. Regulating the electric motor 5 by means of vector control, also-called field-oriented control (FOC), permits these two components to be decoupled and controlled individually.

Conventionally, the procedure of loss minimization consists of optimizing the value of the magnetizing component for a given load torque so as to minimize the total motor losses in steady state operation. However, in order to achieve the anti-/de-icing function, the present invention aims at deliberately inducing losses in the motor's rotor 7 by controlling the magnetizing component or the torque component, or by controlling both simultaneously so as to reduce the power factor and hence the overall efficiency of the motor 5. In this way, the rotor 7 is heated to a temperature high enough to allow the rotating parts (fan 1 and spinner 2) of the aircraft engine E, which are not only mechanically but also thermally connected to the rotor 7, to reach a surface temperature high enough to prevent or reduce the bonding of snow and ice.

The losses can be induced by various means, for example altering the switching frequency, introducing pulsating of wrongly phased phase current, introducing high-frequency variation in the flux-producing axis of the motor's rotor 7, and others. For example, purposely imposing a time-varying current on the magnetizing component ψ_{T} of electromagnetic flux, or purposely injecting switching harmonics into the PWM (pulse width modulation) command signal and electromagnetic flux by low-speed switching will increase the core losses and, thus, advantageously heat up the rotor 7 for anti-/de-icing purposes.

These purposely-induced motor losses are then thermally conducted via a thermal conduction path 6 (highlighted in Fig. 3) to the critical external surfaces of the rotating parts (i.e., blades 1a, 1b of fan 1, and spinner 2) of the electric aircraft engine E. If thermally non-conductive materials are used for these rotating parts 1, 2, inserts made of a thermally conductive material (such as aluminum inserts) may be attached to or embedded inside the rotating parts 1, 2 so as to establish the necessary thermal conduction path 6.

In addition, the provision of the thermal conduction path 6 between the electric motor 5 and the rotating parts 1, 2 helps to improve the cooling performance of the electric aircraft engine E. The heat generated in the electric motor 5 during operation is immediately transferred to the rotating parts 1, 2 via the thermal conduction path 6 and then dissipated from the surfaces of the rotating parts 1, 2 to the environment.

Alternatively or additionally, vibrations may be induced in the motor's rotor 7 by modulating the torque control. This introduces torque ripple (very fast torque variations), which in turn creates torsional vibrations on the shaft line between the electric motor 5 and the fan blades 1a, 1b. These torsional vibrations shake the blades 1a, 1b to such an extent that any ice built up on their external surfaces is shed free. These vibrations can, but not necessarily, excite eigenmodes of the blades 1a, 1b to increase this ice-shedding effect.

The above-described ways of anti-/de-icing the blades 1a, 1b have in common to use a particular control strategy, implemented in an anti-/de-icing control unit, which may correspond to or form part of the engine control unit (ECU), to control the electric motor 5 that drives the fan 1. This control strategy reduces the performance (efficiency) of the electric motor 5, to the benefit of the anti-/de-icing function.

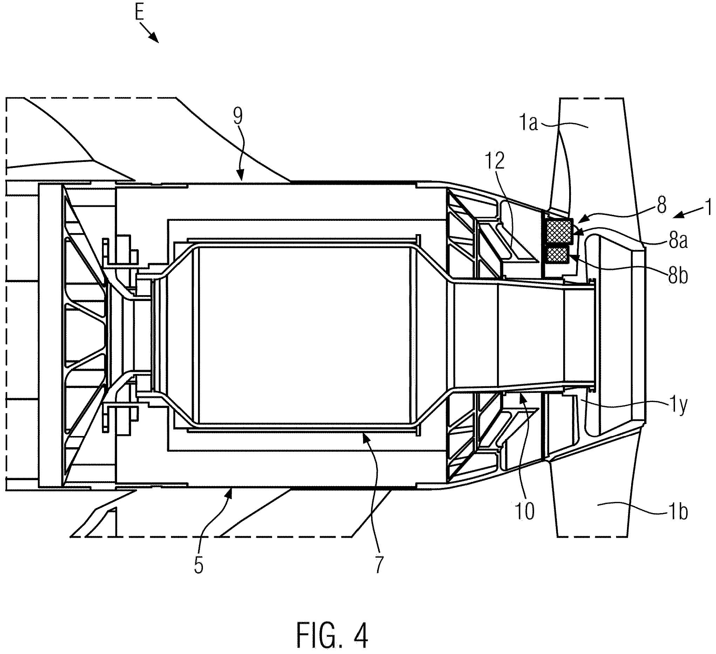

In the electric aircraft engine E shown again in longitudinal section in Fig. 4, an anti-icing and/or de-icing system is used which is a modification of the anti-icing and/or de-icing system described above in connection with Figs. 2 and 3. In both systems, motor losses are induced by selective intervention in the control of the electric motor 5, resulting in additional heating of the electric motor 5, this additional heating being used for anti-icing and/or de-icing of the fan 1 of the electric aircraft engine E. The systems differ only in where exactly this additional heating is generated.

In the electric aircraft engine E shown in Fig. 4, a resolver 8 is additionally provided, consisting of an inner resolver rotor 8b attached to the fan 1 and thus rotating with the rotor 7 of the electric motor 5, and an outer resolver stator 8a attached to a fixed motor shield 12. The resolver 8 is known to be an electromagnetic transducer for converting the angular position of the motor's rotor 7 into an electrical quantity. For this purpose, the stator or rotor windings of the resolver 8 are excited with a sinusoidal alternating voltage. The phase position of the output voltage of the resolver rotor 8a (in the case of stator excitation) or the amplitude ratio of the output voltages of the resolver stator 8b (in the case of rotor excitation) are a measure of the angular position of the rotor 7 of the electric motor 5.

However, according to the present invention, eddy-current losses are deliberately induced in the resolver 8 of the electric aircraft engine E by introducing a high-power, high-frequency component of current and flux in addition to the normal excitation signals for angular position estimation of the rotor 7 of the electric motor 5. This may be accomplished by providing an additional separate circuit in parallel to the normal sinusoidal excitation system for the resolver 8. The induced eddy-current losses heat up the resolver 8. Since the outer resolver rotor 8a, as shown in Fig. 4, is in direct contact with the fan 1 in its central area on the yoke side, the additional heat in the resolver rotor 8a caused by eddy-current losses can be transferred to the fan blades 1a, 1b without significant heat loss by thermal conduction in order to prevent (anti-icing) or eliminate (de-icing) ice formation there. In Fig. 4, a wavy arrow symbolizes this thermal conduction of the heat from the resolver rotor 8a to the an blade 1a.

The solution according to the present invention for anti-icing and/or de-icing the fan 1 of the electric aircraft engine E by heating through the resolver 8 has not been considered so far, in particular because in the case of small electric motors requiring resolvers, the resolvers are simply not large enough in relation to the fan/turbine/propeller blades to ensure sufficient anti-/de-icing capability. However, the solution according to the present invention provides a cost-effective remedy for the pressing problem of anti-/de-icing electric aircraft engines E by using components for this purpose which are already present or required in said engines E. Again, this solution combines two functions in one part. The resolver 8 fulfills both the function of sensing the rotor position (used to control the electric motor 5), and the anti-/de-icing function.

There are various ways to measure the position of the electric motor 5. The resolver 8 is one option. In general, it compares to the other options by being more robust, reliable, but also heavier. However, by combining its position sensing function with the anti-/de-icing function, it becomes possible to realize a full system that is lighter than any combination of independent systems, while authorizing the use of a robust and proven resolver technology.

All the illustrated and above described embodiments open up the long-awaited pathway to more easily meet safety requirements for flying in icing conditions with low complexity and weight, thereby providing an advantage in certification and technical capability. They also reduce the considerable maintenance costs associated with replacement of slip rings in conventional heating systems.

Further advantageous embodiments and preferred developments of these embodiments are set out below:
An electric aircraft engine (E) according to a first embodiment comprises an electric motor (5) with a rotor (7) configured to be driven in rotation about a central axis, a fan (1) having a central yoke (1y) mechanically coupled to the rotor (7) for driving the fan (1) and a plurality of fan blades (1a, 1b) projecting radially outwardly from the yoke (1y), and an anti-icing and/or de-icing system to remove and/or prevent built-up of ice on the fan (1), said anti-icing and/or de-icing system comprising an electrical power source and a wireless energy transfer system (3) for wirelessly transferring energy for anti-icing and/or de-icing from the electrical power source to the fan (1).

According to a development of the first embodiment, the anti-icing and/or de-icing system further comprises at least one electrothermal element (4a, 4b) in thermal communication with the fan (1) and powered by the wirelessly transferred energy, and/or further comprising at least one actuation mechanism powered by the wirelessly transferred energy.

An electric aircraft engine (E) according to a second embodiment comprises an electric motor (5) with a rotor (8) configured to be driven in rotation about a central axis, a fan (1) having a central yoke (1y) mechanically coupled to the rotor (7) for driving the fan (1) and a plurality of fan blades (1a, 1b) projecting radially outwardly from the yoke (1y), an anti-icing and/or de-icing control unit configured to deliberately induce electric motor losses and thereby increase temperature and/or vibrations in the electric motor (5), and a thermal and/or vibrational conduction path (6) for conducting thermal and/or vibrational energy for anti-icing and/or de-icing from the electric motor (5) to the fan (1).

According to a development of the second embodiment, the anti-icing and/or de-icing control unit is configured to deliberately induce the losses in the rotor (7) of the electric motor (5) by executing at least one of the following control measures: altering a switching frequency, introducing pulsating of wrongly phased phase current, and introducing high-frequency variation in a flux-producing axis of the rotor (7).

According to a further development of the second embodiment, the anti-icing and/or de-icing control unit is configured to induce the losses by modulating torque control and thereby generating vibrations in the rotor (7) of the electric motor (5) to shed free the ice built up on the fan (1).

According to still a further development of the second embodiment, the anti-icing and/or de-icing control unit is configured to generate the vibrations at frequencies coinciding with eigenmodes of the fan (1).

According to still a further development of the first embodiment or the second embodiment, the electric motor (5) comprises an electromagnetically excited resolver (8) for determining an angular position of the rotor (7) of the electric motor (5), and an anti-icing and/or de-icing control unit is configured to induce losses by adding a high-power, high-frequency component of current and flux to the normal excitation signals of the resolver (8), thereby heating up the resolver (8).

According to still a further development of the first embodiment or the second embodiment, the resolver (8) consists of a resolver rotor (8b) connected to rotate with the rotor (7) of the electric motor (5), and a resolver stator (8a), and wherein at least one of the resolver rotor (8b) and the resolver stator (8a) is in thermal communication with the fan (1), so that heat from the resolver (8) is allowed to diffuse into the fan (1) for anti-icing and/or de-icing.

According to still a further development of the first embodiment or the second embodiment, the electric aircraft engine (E) further comprises a separate circuit in parallel to a normal resolver excitation system to introduce the high-power, high-frequency component of current and flux into the resolver (8).

According to still a further development of the second embodiment, the anti-icing and/or de-icing control unit corresponds to or is part of an engine control unit ECU for controlling the electric motor (5).

According to still a further development of the first embodiment or the second embodiment, the fan (1) is ducted by means of a casing.

According to still a further development of the first embodiment or the second embodiment, the electric aircraft engine (E) further comprises a spinner (2) positioned forwardly of the fan (1), wherein the energy for anti-icing and/or de-icing is also transferred and/or conducted to said spinner (2).

According to still a further development of the first embodiment or the second embodiment, the fan (1) and/or the spinner (2) are made of a thermally non-conductive material, in which inserts made of a thermally conductive material are positioned.

A further embodiment is directed to an aircraft, comprising at least one electric aircraft engine (E) according to any one of the previous embodiments or developments.

## Claims

1. Electric aircraft engine (E), comprising an electric motor (5) with a rotor (7) configured to be driven in rotation about a central axis, a fan (1) having a central yoke (1y) mechanically coupled to the rotor (7) for driving the fan (1) and a plurality of fan blades (1a, 1b) projecting radially outwardly from the yoke (1y), and an anti-icing and/or de-icing system to remove and/or prevent built-up of ice on the fan (1), said anti-icing and/or de-icing system comprising an electrical power source and a wireless energy transfer system (3) for wirelessly transferring energy for anti-icing and/or de-icing from the electrical power source to the fan (1),
**characterized in that**
the electric motor (5) comprises an electromagnetically excited resolver (8) for determining an angular position of the rotor (7) of the electric motor (5), and an anti-icing and/or de-icing control unit is configured to induce losses by adding a high-power, high-frequency component of current and flux to the normal excitation signals of the resolver (8), thereby heating up the resolver (8).

2. Electric aircraft engine (E), comprising an electric motor (5) with a rotor (7) configured to be driven in rotation about a central axis, a fan (1) having a central yoke (1y) mechanically coupled to the rotor (7) for driving the fan (1) and a plurality of fan blades (1a, 1b) projecting radially outwardly from the yoke (1y), and an anti-icing and/or de-icing system to remove and/or prevent built-up of ice on the fan (1), said anti-icing and/or de-icing system comprising an electrical power source and a wireless energy transfer system (3) for wirelessly transferring energy for anti-icing and/or de-icing from the electrical power source to the fan (1),
**characterized in that**
the wireless energy transfer system (3) consists of two coils, a transmitter coil (3a) electrically coupled to the electrical power source and a receiver coil (3b) thermally connected to the fan (1), the energy being transmitted wirelessly by induction via an air gap from the transmitter coil (3a) to the receiver coil (3b).

3. Electric aircraft engine (E) according to claim 2, wherein the electric motor (5) comprises a hollow-cylindrical motor shaft (10) and a stationary guide shaft (11) arranged inside the hollow-cylindrical motor shaft (10), wherein the transmitter coil (3a) is attached to the front end face of the stationary guide shaft (11) and is powered by the electrical power source via electrical lines in the stationary guide shaft (11), wherein the fan (1) comprises a central yoke (1y), and wherein the transmitter coil (3a) is attached to a rear end face of the central yoke (1y).

4. Electric aircraft engine (E) according to any one of claims 1 to 3, wherein the anti-icing and/or de-icing system further comprises at least one electrothermal element (4a, 4b) in thermal communication with the fan (1) and powered by the wirelessly transferred energy, and/or further comprising at least one actuation mechanism powered by the wirelessly transferred energy.

5. Electric aircraft engine (E) according to any one of claims 2 to 4, wherein the electric motor (5) comprises an electromagnetically excited resolver (8) for determining an angular position of the rotor (7) of the electric motor (5), and an anti-icing and/or de-icing control unit is configured to induce losses by adding a high-power, high-frequency component of current and flux to the normal excitation signals of the resolver (8), thereby heating up the resolver (8).

6. Electric aircraft engine (E) according to claim 1 or 5, wherein the resolver (8) consists of a resolver rotor (8b) connected to rotate with the rotor (7) of the electric motor (5), and a resolver stator (8a), and wherein at least one of the resolver rotor (8b) and the resolver stator (8a) is in thermal communication with the fan (1), so that heat from the resolver (8) is allowed to diffuse into the fan (1) for anti-icing and/or de-icing.

7. Electric aircraft engine (E) according to any one of claims 1, 5 and 6, further comprising a separate circuit in parallel to a normal resolver excitation system to introduce the high-power, high-frequency component of current and flux into the resolver (8).

8. Electric aircraft engine (E) according to any one of claims 1 and 5 to 7, wherein the anti-icing and/or de-icing control unit corresponds to or is part of an engine control unit ECU for controlling the electric motor (5).

9. Electric aircraft engine (E) according to any one of claims 1 to 8, wherein the fan (1) is ducted by means of a casing.

10. Electric aircraft engine (E) according to claim 9, further comprising a spinner (2) positioned forwardly of the fan (1), wherein the energy for anti-icing and/or de-icing is also transferred and/or conducted to said spinner (2).

11. Electric aircraft engine (E) according to claim 9 or 10, wherein the fan (1) and/or the spinner (2) are made of a thermally non-conductive material, in which inserts made of a thermally conductive material are positioned.

12. Aircraft, comprising at least one electric aircraft engine (E) according to any one of claims 1 to 11.
